# EUROPÄISCHE PATENTANMELDUNG

(11) **EP 0 624 793 A1**
(43) Veröffentlichungstag der Anmeldung: **17.11.1994**
(21) Anmeldenummer: 93107122.9
(22) Anmeldetag: 03.05.1993
(51) Int. Cl.: G01N 27/83, G01N 27/82

(54) **Verfahren und Gerät zur Ermittlung von magnetischen Unstetigkeiten in einer Probe aus magnetisierbarem Material**

(71) Anmelder: TUBOSCOPE VETCO (DEUTSCHLAND) GMBH, W-3100 Celle (DE)
(72) Erfinder: Kammann, Reinhold, W-3101 Wienhausen (DE); Knapwost, Helmut, W-3101 Nienhagen (DE); Worms, Manfred, W-3101 Nienhagen (DE); Deeg, Helgo, W-3108 Winsen/Aller (DE)
(74) Vertreter: Busse & Busse Patentanwälte

(57) **Zusammenfassung**

Zur Ermittlung von magnetischen Unstetigkeiten in einer Probe aus magnetisierbarem Material wird ein Magnetfeld in der Probe induziert und mittels Sensoren der aus dem Magnetfeld in der Probe resultierende magnetische Streufluß nahe der Oberfläche der Probe ermittelt. Die ermittelten Werte werden in elektrische Spannungssignale umgesetzt, wobei die Magnetfeldinduktions- und Sensor-Einheit (18) entlang einem vorgegebenen Pfad über die Probe bewegt wird. Die dem magnetischen Streufluß entsprechenden elektrischen Spannungssignale werden einer Auswertung unterzogen und die Ergebnisse der Auswertung ausgegeben. Dabei werden die von den Sensoren gelieferten elektrischen Spannungssignale in einer programmierbaren Verstärkerstufe verstärkt, die Ausgangssignale der Verstärkerstufe in einer Signalbewertungsstufe einer frequenzabhängigen Bewertung unterzogen und die Ausgangssignale der Signalbewertungsstufe in einer Spitzenwertbildungs- und -haltestufe zeitabhängig aufbereitet. Das Gerät umfaßt hierfür einen Signalprozessor (22), der einen programmierbaren Verstärkermodul (60), einen Signalbewertungsmodul (70), und einen Spitzenwertbildungs- und -haltemodul (80) aufweist.

## Beschreibung

Die Erfindung bezieht sich auf ein Verfahren und ein Gerät zur Ermittlung von magnetischen Unstetigkeiten in einer Probe aus magnetisierbarem Material gemäß dem Oberbegriff der Ansprüche 1 bzw. 5.

Ausgehend von einem verfahren und einem Gerät gattungsgemäßer Art, wie sie aus der EP 0 238 209 B1 bekannt sind, befaßt sich die Erfindung mit dem Problem, lokale magnetische Unstetigkeiten bzw. Ungänzen in Proben wie insbesondere ebenen Bodenwänden von Großbehältern, z.B. Tanks, zuverlässig und lückenlos zu ermitteln und die ermittelten Unstetigkeiten hinsichtlich ihrer Abmessungen, insbesondere ihrer Tiefe möglichst genau zu bestimmen, und zwar auch dann, wenn sich die Unstetigkeiten auf der dem Prüfgerät abgewandten Seite der Probe befinden.

Die Erfindung löst das Problem durch ein Verfahren gemäß Anspruch 1 und ein Gerät gemäß Anspruch 5. Hinsichtlich wesentlicher weiterer Ausgestaltungen wird auf die Ansprüche 2 bis 4 und 6 bis 19 verwiesen.

Verfahren und Gerät nach der Erfindung sichern ein hohes Maß an Zuverlässigkeit bei der Ermittlung von Unstetigkeiten und an Genauigkeit bei der Erfassung der Daten über das Ausmaß der Unstetigkeiten. Die je nach Frequenzinhalt unterschiedliche Wichtung der Signale schafft einen Ausgleich mit einer zumindest annähernden Linearisierung der Relation von Signalhöhe und Unstetigkeitentiefe, wobei die Spitzenwertbildung und -haltung eine eindeutige Erfassung und Erkennung auch von Signalen geringen Frequenzinhalts gewährleistet. Dabei bleibt die in der Signalbewertungsstufe erreichte Linearisierung erhalten.

Das Gerät hat dabei einen einfachen Grundaufbau und ist an die jeweiligen Prüfbedingungen zum Zwecke der Optimierung der Datengenauigkeit anpaßbar. Die besondere Gestaltung der Sensorträger begünstigt ihrerseits eine gleichmäßige und störungsfreie Ermittlung auch geringer magnetischer Streuflußwerte, wobei die Sensorträger gute Eigenschaften auch beim Überlaufen von Unebenheiten in der Laufbahn des Gerätes darbieten.

Weitere Einzelheiten und Vorteile der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine schematische, abgebrochene Seitenansicht eines Gerätes zur Ermittlung von Unstetigkeiten nach der Erfindung, teilweise im Schnitt,
- Fig. 2: eine Draufsicht auf das Gerät nach Fig. 1, teilweise im Schnitt,
- Fig. 3: eine vergrößerte Ausschnittdarstellung zur näheren Veranschaulichung der Sensorträger und ihrer Aufhängung am Gerät, und
- Fig. 4: ein Flußdiagramm betreffend die Aufbereitung aufgenommener Signale.

Das in der Zeichnung nur schematisch wiedergegebene Gerät zur Ermittlung von magnetischen Unstetigkeiten bzw. Ungänzen in einer Probe aus magnetisierbarem Material ist in erster Linie dazu bestimmt, großflächige und im wesentlichen ebene Proben zu untersuchen, wie sie beispielsweise von einer Bodenwandung von Großbehältern, z.B. Tanks, gebildet werden.

Im einzelnen besteht das Gerät aus einem entlang eines vorgebbaren Pfades über die Probe, nachstehend der Einfachheit halber stets als Tankboden bezeichnet, verfahrbaren, von Hand führbaren Wagen 1, dessen mittels eines Elektromotors 2 über ein Getriebe 3 angetriebenen Laufräder mit 4 und dessen in Fahrtrichtung 5 nachlaufenden, nicht angetriebenen Laufräder mit 6 bezeichnet sind. Zur Führung des Wagens 1 über den Tankboden 7 ist eine nur im Bereich ihres unteren Endes veranschaulichte Deichsel 8 vorgesehen, deren Schrägstellung mittels einer längenveränderlichen Stellstrebe 9 einstellbar ist. Die Deichsel kann zugleich Träger weiterer Aggregate des Prüfgerätes sein, beispielsweise eines optischen Anzeigegerätes für die unmittelbare Information einer Bedienungsperson.

Das Gerät weist ferner eine Magnetisierungsvorrichtung 10 auf, mittels der in der Probe ein Magnetfeld induzierbar ist. Die Magnetisierungsvorrichtung 10 umfaßt zumindest zwei Elektromagnete, deren Spulen mit 11,12 und deren Magnet- bzw. Spulenkerne mit 13 bzw. 14 bezeichnet sind. Eine die Elektromagneteübergreifende Rückschlußplatte ist mit 15 und die Polschuhe sind mit 16 bzw. 17 bezeichnet. Die Polschuhe erstrecken sich quer zur Fahrtrichtung 5 horizontal und in dichtem Abstand zum Tankboden 7 und haben eine Länge, die im wesentlichen der Gesamtbreite des Gerätes entspricht.

Im Zwischenraum zwischen den Polschuhen 16,17 ist eine Sensor-Einheit 18 angeordnet, die eine Mehrzahl von Sensorträgern 19 umfaßt, welche an Trägerschienen 20,21 aufgehängt sind, wie das unten noch näher erläutert werden wird.

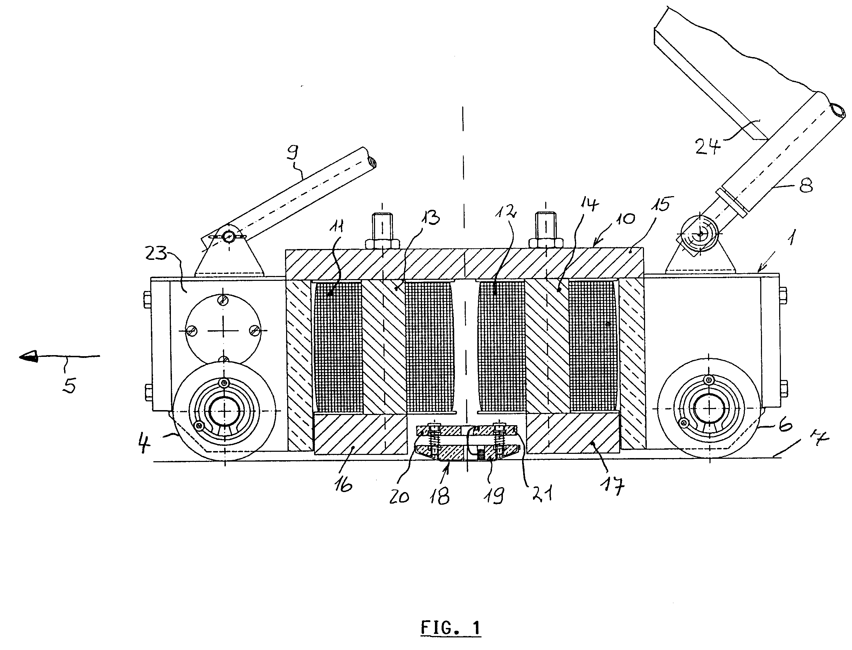

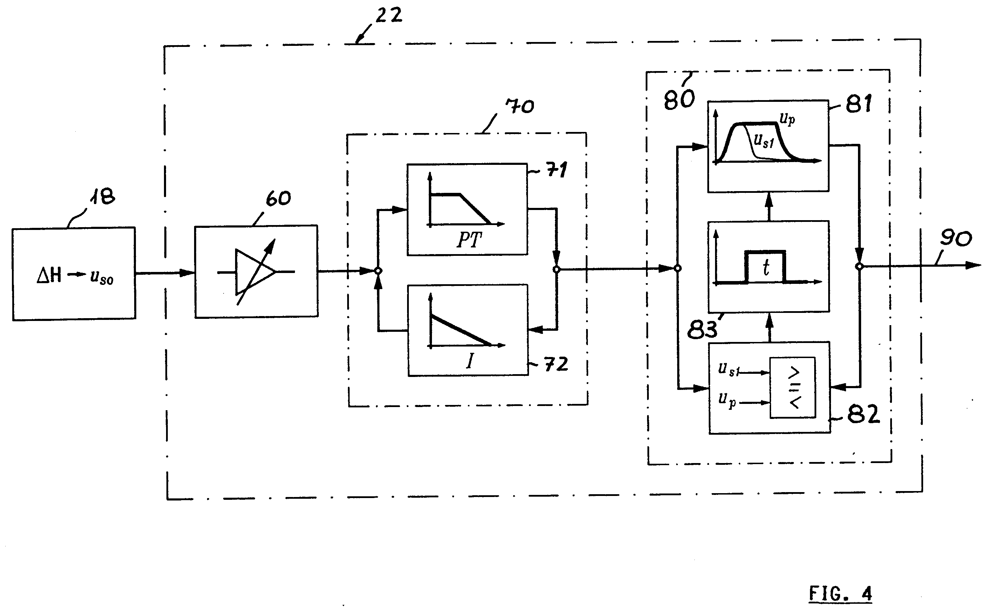

Das über ein Kabel an eine elektrische Stromversorgung anschließbare Gerät umfaßt einen an die Sensor-Einheit 18 angeschlossenen Signalprozessor 22, auf dessen Ausgestaltung weiter unten in Verbindung mit Fig. 4 noch eingegangen werden wird. Dieser Signalprozessor kann beispielsweise im Abteil 23 des Gerätes oder in der ein optisches Anzeigegerät aufnehmenden und einen elektronischen Speicher umfassenden Baueinheit 24 integriert sein, das der Deichsel 8 zugeordnet und in Fig. 1 schematisch angedeutet ist. Neben den dem Gerät unmittelbar und mitverfahrbar zugeordneten Mitteln zur optischen Darstellung von Ermittlungsergebnissen können Mittel zur weiteren Auswertung und zur Speicherung ermittelter Daten vorhanden sein, die ebenfalls von der Deichsel 8 getragen sein können, die jedoch auch eine ortsfeste Anordnung in geeigneter Entfernung finden können und mit dem Gerät in Leitungsverbindung stehen. Der Vollständigkeit halber sei angemerkt, daß der elektrische Teil des Gerätes Verbindungsleitungen, Ein- und Ausschalter zur Aktivierung der Aggregate, Steuerglieder und Regelglieder umfaßt.

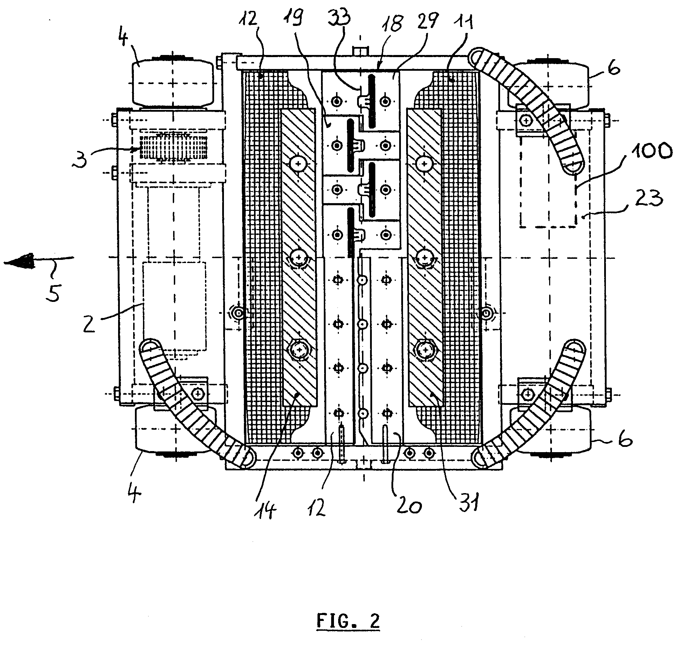

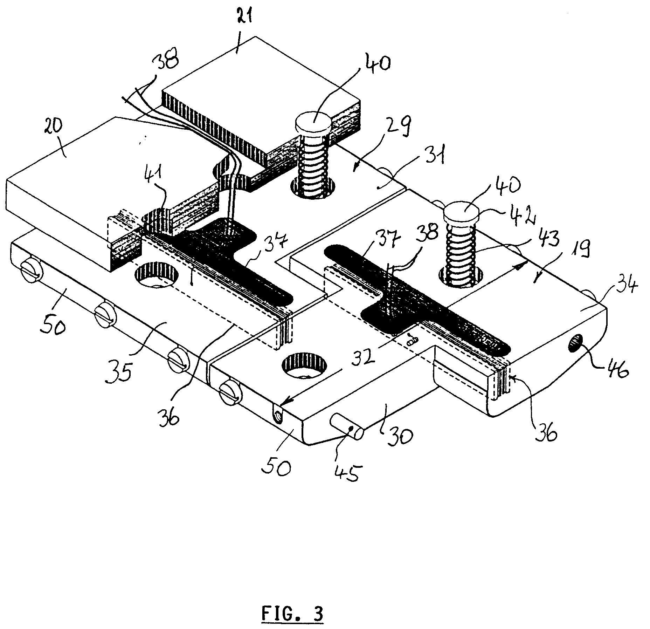

Wie sich insbesondere den Fig. 2 und 3 näher entnehmen läßt, umfaßt die Sensor-Einheit T-förmige Sensorträger 19, die den Hauptteil der Sensor-Einheit 18 einnehmen, und an den Enden der Sensor-Einheit angeordnete L-förmige Sensorträger 29. Die T- und L-förmigen Sensorträger 19,29 haben jeweils im Bereich ihres parllel zur Fahrtrichtung 5 ausgerichteten Schenkels 30 bzw. 31 eine Gesamttiefe 32, die der Gesamtbreite der Sensor-Einheit 18, gemessen in Fahrtrichtung 5, entspricht. Gemeinsam bilden die Sensorträger 19,29 eine Sensor-Einheit 18 linealförmiger Gestalt rechtwinkligen Umrisses, bei der die abwechselnd ausgerichteten Sensorträger 19 in kammähnlicher Verzahnung die quer zur Fahrtrichtung 5 des Wagens 1 verlaufende Längsmittelachse 33 der Sensor-Einheit 18 in bzw. entgegen Fahrtrichtung überragen.

Anstelle einer T- bzw. L-förmigen Ausbildung der Sensorträger 19,29 sind auch Sensorträger anderer Umrißformen denkbar, z.B. Sensorträger in Dreieckform, bei denen die Höhe der Dreiecke der Gesamtbreite der SensorEinheit 18 entspricht. Auch bei einer derartigen Ausgestaltung kann eine Sensor-Einheit gebildet werden, die ein Sensorlineal rechtwinkligen Umrisses bildet, wenn neben mittleren Sensorträgern in Form gleichschenkliger Dreiecke an den Enden der Sensor-Einheit Sensorträger in Form angepaßter rechtwinkliger Dreiecke als Ergänzungsstücke vorgesehen sind.

Im Kopfteil 34 bzw. 35 der Sensorträger 19,29 sind jeweils Sensoren 36 angeordnet, die bevorzugt als stabförmige Vertikalspulen ausgebildet sind, jedoch auch als Hallsensoren oder als sonstige Sensoren ausgebildet sein können. Vertikalspulen haben allerdings den Vorzug, daß sie differentiellen Streuflußunterschiede messen. Bevorzugt sind die Sensoren 36 in entsprechenden Ausnehmungen der Sensorträger 19,29 angebracht und beispielsweise durch Eingießen in eine Vergußmasse 37 fixiert und geschützt, aus der lediglich die Anschlußleiter 38 herausgeführt sind. Die Sensoren 36 sind entsprechend der abwechselnden Ausrichtung der Sensorträger 19 in zwei quer zur Fahrtrichtung 5 des Wagens 1 und parallel zur Ausrichtung der Polschuhe 16,17 verlaufenden Reihen angeordnet, wobei die Sensoren 36 in der einen Reihe zu den Sensoren 36 in der anderen Reihe auf Lücke versetzt angeordnet sind und einander an ihren Enden wechselseitig überlappen. Dabei beträgt bevorzugt die Gesamtüberlappung der Sensoren 36 in der Sensor-Einheit 18 zumindest 10%.

Die Sensorträger 19,29 sind am Wagen 1 begrenzt höhenbeweglich abgestützt. Hierzu sind sie mit sich aufwärtserstreckenden Führungsbolzen 40 versehen, die Führungsöffnungen 41 in den wagenfesten Trägerschienen 20,21 durchgreifen. Die Führungsbolzen 40 übergreifen mit ihrem Kopf 42 die jeweilige Führungsbohrung 41 und begrenzen dadurch die untere Endstellung der Sensorträger 19,29. In diese werden die Sensorträger 19,29 durch Druckfedern 43 gedrückt, die bevorzugt als Spiraldruckfedern ausgebildet sind, die den Führungsbolzen 40 umgeben und sich an den Sensorträgern einerseits und den Trägerschienen 20,21 andererseits abstützen.

Die Sensorträger 19,29 sind ferner jeweils gelenkig untereinander verbunden. Dazu sind die parallel zur Fahrtrichtung 5 des Wagens 1 ausgerichteten Schenkel 30,31 der Sensorträger 19,29 mit parallel zur Längsmittelachse 33 der Sensor-Einheit 18 ausgerichteten Gelenkzapfen 45 versehen, die in ihnen fluchtend gegenüberliegende Lagerbohrungen 46 in den Kopfteilen 34,35 benachbarter Sensorträger 19,29 mit Spiel eingreifen.

Die höhenbewegliche Abstützung der Sensorträger 19,29 schafft in Verbindung mit der gelenkigen Verbindung der Sensorträger einen Verbund, der eine gute Anpassung an zu überlaufende Flächen des Tankbodens 7 erbringt und gewährleistet, daß ein sicheres Überlaufen auch bei stärkeren und abrupten Unebenheiten gewährleistet ist, wie sie beispielsweise von Schweißnähten zwischen Bodenplatten gebildet sein können. Die Erstreckung aller Sensor-Träger 19,29 über die Gesamtbreite der Sensor-Einheit 18 sorgt für nur relativ geringe Lageänderungen der Sensoren 36 beim Überlaufen von Unebenheiten, und die insgesamt erreichte-Lagestabilisierung der Sensorträger 19,29 innerhalb der Sensor-Einheit 18 fördert erheblich die Erzielung eines genauen Meßergebnisses.

Unterseitig sind die Sensorträger 19,29 von einem lösbar befestigten,z.B. angeschraubten, verschleißarmen Gleitblech 50 als austauschbarem Verschleißteil abgedeckt, so daß die Sensorträger 19,29 samt den Sensoren 36 weitgehend vor eigenem Verschleiß geschützt sind.

Wie schließlich der Fig. 4 näher entnommen werden kann, umfaßt der Signalprozessor 22 einen vorzugsweisen programmierbaren Verstärkermodul 60. Die von der Sensor-Einheit 18, deren Sensoren 36 den Streufluß ΔH aufnehmen und in Spannungssignale uₛₒ mit ΔH proportionaler Amplitude umwandeln, gelieferten Signale uₛₒ werden vom Verstärkermodul 60 mit hoher Gleichtaktunterdrückung und automatischer Driftregelung verstärkt, und zwar im Bereich bis 120 dB. Zugleich überwacht der Verstärkermodul 60 die Funktion der Sensoren 36 und meldet gegebenenfalls festgestellte Ausfälle. Ferner umfaßt der Signalprozessor 22 einen Signalbewertungsmodul 70, der seinerseits eine Prozessor-Einheit 71 mit pT₁/pT₂-Übertragungsverhalten (Zeitverzögerung zweiter Ordnung) und eine Signalrückführung 72 mit integralem Charakter I umfaßt. Die vom Signalbewertungsmodul 70 gebildete Gesamtstufe erhält dementsprechend einen Differential-Porportional-Integral-Charakter. In der Signalbewertungsstufe wird eine frequenzabhängige Signalbewertung abgestimmt auf den zu erwartenden Signalbereich vorgenommen, bei der die Ausgangssignale des Verstärkermoduls 16 durch Filtern einer Bewertung mit höherer Wichtung der auf den niederfrequenten Streufluß von Unstetigkeiten geringer Tiefe zurückgehenden Signale unterzogen werden mit der Folge einer Bildung einer zumindest annähernd linearen Relation zwischen den Ausgangssignalen aus dem Signalbewertungsmodul 70 und den Tiefenabmessungen der zugehörigen Unstetigkeiten.

Schließlich umfaßt der Signalprozessor 22 des Gerätes einen Spitzenwertbildungs- und Haltemodul 80 mit einem Zwischenspeicher 81 mit Eingangssignal uₛ₁ und Ausgangssignal uₚ, einem Spitzwertsteuerglied 82 und einem Vergleichsglied 83. Dieser Modul 80 bereitet die Ausgangssignale des Signalbewertungsmoduls 70 zeitabhängig derart auf, daß bei ansteigender Amplitude des Eingangssignals uₛ₁ das Ausgangssignal uₚ dem Eingangssignal mit dem Eingangswert folgt und bei gleichbleibender oder fallender Amplitude des Eingangssignals der zuletzt gemessene Maximalwert für ein vorgegebene Zeit t gehalten wird. Nach Ablauf der vorgegebenen Zeitspanne wird der Maximalwert dann gelöscht, wenn nicht während der Halte- und der anschließenden Löschphase das Eingangssignal einen Amplitudenwert annimmt, der den gehaltenen Maximalwert übersteigt. In diesem Falle wird das Ausgangssignal unter Aufhebung des Haltevorganges zu einem amplitudenverlustfreien Folgen des Eingangssignals freigegeben, so daß die im Signalbewertungsmodul 70 erzielt Linearisierungsystem durchgängig erhalten bleibt.

Die derart im Signalprozessor 22 aufbereiteten Signale können nunmehr den jeweils vorgesehenen Mitteln zur optischen und gegebenenfalls akkustischen Signaldarstellung amplitudenverlustfrei zugeleitet werden, wie dies in Fig. 4 der Pfeil 90 versinnbildlicht. Gleichzeitig können die Ausgangssignale des Signalprozessors 22 Mitteln zur Speicherung und Mitteln zur weiteren Auswertung zugeführt werden, beispielsweise einer Datenverarbeitungsanlage mit einem Programm, das eine grafische Darstellung der Unstetigkeitenverteilung in der Probenfläche und deren nähere Kennzeichnung nach Flächenabmessung und Tiefe gestattet.

Zur Ermittlung von magnetischen Unstetigkeiten in einer Probe, namentlich einem Tankboden 7, wird das Gerät nach Überführung in einen betriebsbereiten Zustand entlang einem vorgegebenen Pfad über den Tankboden 7 bewegt, wobei ein optoelektrischer Weggeber 100, der bevorzugt zur Vermeidung von Meßwertverfälschungen durch Schlupf auf der Achse der nicht angetriebenen Räder 6 angeordnet ist, genaue Positionsangaben liefert. Durch entsprechende Beaufschlagung der Elektromagnete 11,13 bzw. 12,14 kann das induzierte Gleichfeld, dessen Feldlinien in Ebenen parallel zur Fahrtrichtung verlaufen, den jeweiligen Erfordernissen, wie sie sich aus den Besonderheiten der Probe, z.B. der Plattendicke o.dgl., ergeben, angepaßt werden, um die Genauigkeit ermittelter Daten zu optimieren. Zu diesem Zwecke ist bevorzugt auch der Abstand der Polschuhe 16,17 zu der zu überfahrenden Oberfläche der Probe einstellbar, z.B. durch Höhenverstellung der Laufradachsen relativ zum Wagen 1.

Die von den Sensoren 36 fortlaufend gemessenen Streuflußwerte werden in Spannungssignale umgesetzt, die nun in der vom Verstärkermodul 60 gebildeten Verstärkerstufe verstärkt werden, und zwar mit hoher Gleichtaktunterdrückung und automatischer Driftregelung. Die Verstärkerstufe mit ihrer Verstärkung bis etwa 120 dB kann hinsichtlich des Verstärkungsgrades programmiert werden, um dadurch die besonderen Bedingungen einer jeweiligen Probe optimal zu berücksichtigen. Der Übertragungsbereich des Verstärkermoduls 60 liegt bevorzugt im Bereich zwischen 0.1 und 300 Hz, und auch dieser Übertragungsbereich kann zur Anpassung an besondere Probenbedingungen durch Programmierung verändert werden.

Das Ausgangssignal der Verstärkerstufe wird nun in der vom Signalbewertungsmodul 70 gebildeten Signalbewertungsstufe durch Filtern einer frequenzabhängigen Bewertung unterzogen, bei der in Abstimmung auf den zu erwartenden Signalbereich die auf niederfrequenten Streufluß von Unstetigkeiten geringer Tiefe zurückgehenden Signale eine höhere Wichtung erfahren als Signale, die auf Unstetigkeiten geringer Tiefe zurückgehen, die einen geringer Streufluß hervorrufen, im Frequenzspektrum aber höher liegen. Die so linearisierten Signale werden nun in der Spitzenwertbildungs- und Haltestufe des Moduls 80 einer zeitabhängigen Aufbereitung unterzogen, bei der die Eingangssignale in einen Zwischenspeicher geladen werden, solange es sich um Eingangssignale mit ansteigender Amplitude handelt. Bei Eintreffen von Eingangssignalen mit gleichbleibender oder fallender Amplitude wird das den Eingangssignalen mit steigender Amplitude folgende Ausgangssignal auf dem zu diesem Zeitpunkt erreichten Spitzenwert für eine vorgegebene Zeitspanne gehalten, damit auch kurze Signale zuverlässig erfaßt werden und nicht unbemerkt untergehen. Treten während dieser Haltephase keine Eingangssignale zur Spitzenwertbildungs und Haltestufe auf, wird nach Verstreichen der vorgegebenen Zeitspanne der zuletzt gehaltene Spitzenwert gelöscht. Sollte jedoch in der Halte- bzw. der sich anschließenden Löschphase wieder ein Eingangssignal anliegen, dessen Amplitude den gehaltenen Spitzenwert übersteigt, wird unmittelbar das Ausgangssignal unter Aufhebung des Haltevorgangs freigegeben, das nunmehr wieder amplitudenverlustfrei dem Eingangssignal folgen und der nachfolgenden Signaldarstellungs- und/oder Dokumentationsstufe zugeführt werden kann.

Das Verfahren nach der Erfindung ist in seiner Anwendung nicht auf spezielle Proben wie ebene Wandungen beschränkt, sondern kann grundsätzlich bei allen magnetisierbaren Proben, z.B. bei Rohrwandungen, eingesetzt werden. Dies gilt auch für das oben beschriebene Gerät, dessen bauliche Ausgestaltung allerdings für den Einsatz auf ebenen Flächen von Proben optimiert ist.

## Patentansprüche

1. Verfahren zur Ermittlung von magnetischen Unstetigkeiten in einer Probe aus magnetisierbarem Material, insbesondere von korrosionsbedingten Unstetigkeiten in Behälterwandungen, bei dem
- ein Magnetfeld in der Probe induziert wird,
- mittels Sensoren der aus dem Magnetfeld in der Probe resultierende magnetische Streufluß nahe der Oberfläche der Probe ermittelt wird und die ermittelten Werte in elektrische Spannungssignale umgesetzt werden, wobei die Magnetfeldinduktions- und Sensor-Einheit entlang einem vorgegebenen Pfad über die Probe bewegt wird,
- die dem magnetischen Streufluß entsprechenden elektrischen Spannungssignale einer Auswertung in einem Signalprozessor unterzogen und die Ergebnisse der Auswertung ausgegeben werden, **dadurch gekennzeichnet,** daß
- die von den Sensoren gelieferten elektrischen Spannungssignale in einer Verstärkerstufe eine programmierbare Verstärkung mit hoher Gleichtaktunterdrückung und automatischer Driftregelung erfahren,
- die Ausgangssignale der Verstärkerstufe in einer Signalbewertungsstufe durch Filtern einer frequenzabhängigen Bewertung mit höherer Wichtung der auf den niederfrequenten Streufluß von Unstetigkeiten geringer Tiefe zurückgehenden Signale unterzogen werden,
- die Ausgangssignale der Signalbewertungsstufe in einer Spitzenwertbildungs- und -haltestufe zeitabhängig aufbereitet werden, wobei bei ansteigender Amplitude des Eingangssignals das Ausgangsignal diesem mit dem Eingangswert folgt und bei fallender Amplitude des Eingangssignals der zuletzt gemessene Maximalwert der Amplitude für eine vorgegebene Zeit gehalten und danach gelöscht wird, wenn nicht während der Halte- oder Löschphase das Eingangssignal einen Amplitudenwert annimmt, der den gehaltenen Maximalwert übersteigt und infolgedessen das Ausgangssignal unter Aufhebung des Haltevorgangs aktualisiert wird.

2. Verfahren nach Anspruch 1, **dadurch gekennzeichnet**, daß in der Verstärkerstufe eine Funktionsüberwachung der Sensoren vorgenommen wird.

3. Verfahren nach Anspruch 1 oder 2, **dadurch gekennzeichnet,** das zur Signalbewertung in der Signalbewertungsstufe ein Regelkreis mit Differential-Proportional-Integral-Charakter verwendet wird.

4. Verfahren nach einem der Ansprüche 1 bis 3, **dadurch gekennzeichnet,** daß zur Spitzenwerthaltung die Eingangssignale in der Spitzenwertbildungs- und -haltestufe in einem ansteigenden Eingangssignalen folgenden Zwischenspeicher geladen und die Ein- und Ausgangssignale miteinander on-line verglichen werden, wobei das Ausgangssignal zu einem amplitudenverlustfreien Folgen des Eingangssignals freigegeben wird, sobald in der Halte- oder der anschließenden Löschphase der Wert des Eingangssignals den des Ausgangssignals übersteigt.

5. Gerät zur Ermittlung von magnetischen Unstetigkeiten in einer Probe aus magnetisierbarem Material, bestehend aus
- einem entlang eines vorgebbaren Pfades über die Probe, insbesondere die Bodenwandung von Großbehältern, verfahrbaren, von Hand führbaren Wagen (1), - einer Magnetisierungsvorrichtung (10) zur Induktion eines Magnetfeldes in der Probe,
- Sensoren (36) zur Ermittlung des magnetischen, aus dem Magnetfeld und den erfaßten Unstetigkeiten resultierenden magnetischen Streuflusses nahe der Oberfläche der Probe,
- einem Signalprozessor (22), und
- Mitteln (24) zur optischen Darstellung sowie zur Speicherung der Ermittlungsergebnisses für deren weitere Auswertung, **dadurch gekennzeichnet,** daß der Signalprozessor (22)
- einen programmierbaren Verstärkermodul (60) aufweist, mittels dem die von den Sensoren gelieferten elektrischen, dem magnetischen Streufluß entsprechenden Signale der Sensoren (36) mit hoher Gleichtaktunterdrückung und automatischer Driftregelung verstärkbar sind,
- einen Signalbewertungsmodul (70) umfaßt, der die Ausgangssignale des Verstärkermoduls (60) durch Filtern einer frequenzabhängigen Bewertung mit höherer Wichtung der auf den niederfrequenten Streufluß von Unstetigkeiten geringer Tiefe zurückgehenden Signale unterzieht, und
- einen Spitzenwertbildungs- und -haltemodul (80) hat, der die Ausgangssignale des Signalbewertungsmoduls (70) zeitabhängig derart aufbereitet, daß bei ansteigender Amplitude des Eingangssignals das Ausgangssignal diesem mit dem Eingangswert folgt und bei Fallen der Amplitude der zuletzt gemessene Maximalwert für eine vorgegebene Zeit gehalten und danach gelöscht wird, wenn nicht während der Halte- oder der anschließenden Löschphase das Eingangssignal einen Wert annimmt, der den gehaltenen Maximalwert übersteigt, und dadurch das Ausgangssignal unter Aufhebung des Haltevorgangs zu einem amplitudenverlustfreien Folgen des Eingangssignals freigibt.

6. Gerät nach Anspruch 5, **dadurch gekennzeichnet,** daß die Magnetisierungsvorrichtung (10) von Elektromagneten (11,13;12,14) gebildet ist.

7. Gerät nach Anspruch 5 oder 6, **dadurch gekennzeichnet,** daß als Sensoren (36) in Sensorträgern (19,29) angeordnete Vertikalspulen vorgesehen sind.

8. Gerät nach einem der Ansprüche 5 bis 7, **dadurch gekennzeichnet,** daß die Sensoren (19) in zwei quer zur Fahrtrichtung (5) des Wagens (1) und parallel zur Ausrichtung der Polschuhe (16,17) der Elektromagnete (11,13;12,14) verlaufenden Reihen angeordnet sind.

9. Gerät nach Anspruch 8, **dadurch gekennzeichnet,** daß die Sensorträger (19,29) am Wagen (1) begrenzt höhenbeweglich abgestützt sind.

10. Gerät nach Anspruch 9, **dadurch gekennzeichnet,** daß die Sensorträger (19,29) jeweils unter Vorlast einer Druckfeder (43) stehen.

11. Gerät nach einem der Ansprüche 8 bis 10, **dadurch gekennzeichnet,** daß die Sensorträger (19,29) gemeinsam eine linealförmige Sensor-Einheit (18) rechtwinkligen Umrisses bilden, wobei die Sensorträger (19) abwechselnd in und entgegen Fahrtrichtung (5) kammähnlich die quer zur Fahrtrichtung (5) des Wagens (1) verlaufende Längsmittelachse (33) der Sensor-Einheit (18) überragen.

12. Gerät nach Anspruch 11, **dadurch gekennzeichnet,** daß die Sensorträger (19) T-förmig ausgebildet sind und im Bereich ihres parallel zur Fahrtrichtung (5) des Wagens (1) ausgerichteten Schenkels (30) eine Gesamttiefe haben, die der Gesamtbreite der Sensor-Einheit (18) entspricht.

13. Gerät nach einem der Ansprüche 8 bis 12, **dadurch gekennzeichnet,** daß die Sensorträger (19,29) jeweils gelenkig untereinander verbunden sind.

14. Gerät nach Anspruch 13, **dadurch gekennzeichnet,** daß die parallel zur Fahrtrichtung (5) des Wagens (1) ausgerichteten Schenkel (30,31) der Sensorträger (19,29) mit parallel zur Längsmittelachse (33) der Sensor-Einheit (18) ausgerichteten, nahe dem Schenkelende angeordneten Gelenkzapfen (45) versehen sind, die in ihnen fluchtend gegenüberliegende Lagerbohrungen (46) in den Kopfteilen (34,35) benachbarter Sensorträger (19,29) eingreifen.

15. Gerät nach Anspruch 14, **dadurch gekennzeichnet,** daß die Gelenkzapfen (45) mit Spiel in den ihnen zugeordneten Lagerbohrungen (46) aufgenommen sind.

16. Gerät nach einem der Ansprüche 9 bis 15, **dadurch gekennzeichnet,** daß an den Enden der Sensor-Einheit (18) L-förmige Sensorträger (29) vorgesehen sind, die im Bereich ihres parallel zur Fahrtrichtung (5) ausgerichteten Schenkels (31) eine Gesamttiefe haben, die der Gesamtbreite der Sensor-Einheit (18) entspricht.

17. Gerät nach einem der Ansprüche 8 bis 16, **dadurch gekennzeichnet,** daß die Sensoren (36) in der einen Reihe auf Lücke versetzt zu den Sensoren (36) in der anderen Reihe angeordnet sind und einander an ihren Enden wechselseitig überlappen.

18. Gerät nach Anspruch 17, **dadurch gekennzeichnet,** daß die Sensoren (36) einander um zumindest 10% überlappen.

19. Gerät nach einem der Ansprüche 8 bis 18, **dadurch gekennzeichnet,** daß die Sensorträger (19,29) unterseitig von einem lösbar befestigten, verschleißarmen Gleitblech (50) als austauschbarem Verschleißteil abgedeckt sind.
